# EUROPÄISCHE PATENTANMELDUNG

(11) **EP 2 826 400 A2**
(43) Veröffentlichungstag der Anmeldung: **21.01.2015**
(21) Anmeldenummer: 14001850.8
(22) Anmeldetag: 28.05.2014
(51) Int. Cl.: A46B 5/02, A61C 17/22

(54) **Greifhilfe für eine Zahnbürste und/oder für einen Zahnbürstenaufsatz**

(30) Priorität: 29.05.2013 DE 102013009101; 09.07.2013 DE 102013011387
(71) Anmelder: Dr. Hinz Dental-Vertriebsgesellschaft mbH & Co. KG, 44623 Herne (DE)
(72) Erfinder: Hinz, Rolf, 44623 Herne (DE)
(74) Vertreter: Von Rohr Patentanwälte Partnerschaft mbB

(57) **Zusammenfassung**

Dargestellt und beschrieben ist eine Greifhilfe (1) für eine Handzahnbürste oder eine elektrische Zahnbürste (7) oder einen Aufsatz (6) einer elektrischen Zahnbürste (7), mit wenigstens einem Halteabschnitt (2) und mit wenigstens einem Befestigungsabschnitt (3), wobei der Halteabschnitt (2) wenigstens eine Halteöffnung (4) für wenigstens einen Finger oder Zeh eines Benutzers der Greifhilfe aufweist und wobei der Befestigungsabschnitt (3) wenigstens eine von der Halteöffnung (4) getrennte Befestigungsöffnung (5) für die Zahnbürste (7) oder den Aufsatz (6) aufweist, wobei der Befestigungsabschnitt (3) zur Befestigung der Greifhilfe (1) mantel- und/oder längsseitig an der Zahnbürste (7) oder dem Aufsatz (6) ausgebildet ist, wobei ein einstückiger den Befestigungsabschnitt (3) und den Halteabschnitt (2) bildender Grundkörper aus einem elastischen Material derart vorgesehen ist, dass der Befestigungsabschnitt (3) durch Ein- und/oder Durchstecken eines Handgriffs (8) der Zahnbürste (7) oder eines Aufsatzes (6) oder durch seitliches Anklemmen an den Handgriff (8) oder den Aufsatz (6) mit der Zahnbürste (7) oder dem Aufsatz (6) reibschlüssig verbindbar ist.

## Beschreibung

Die vorliegende Erfindung betrifft eine Greifhilfe für eine Handzahnbürste oder eine elektrische Zahnbürste oder einen Aufsatz einer elektrischen Zahnbürste. Darüber hinaus betrifft die vorliegende Erfindung ein Set mit einer Greifhilfe und mit einer Zahnbürste und/oder mit wenigstens einem Zahnbürstenaufsatz.

Aus der DE 298 16 886 U1 ist eine Greifhilfe für eine behinderte Hand zur Aufnahme eines stabförmigen Gegenstandes bekannt. Die bekannte Greifhilfe weist einen kugelförmigen, hohlen Körper aus Kunststoff mit mindestens einem Paar sich gegenüberliegender Aussparungen auf, durch das der stabförmige Gegenstand gesteckt wird. Die Greifhilfe bildet somit eine Verdickung aus, die es Personen, die dicke Hände haben oder die rheumatische Erkrankungen an den oberen Extremitäten aufweisen, erleichtert, den stabförmigen Gegenstand zu greifen. Gerade dann, wenn die Zahnhygiene im Fall von pflegebedürftigen Personen von Dritten unterstützt oder übernommen werden muss, kommt es jedoch häufiger zur Benetzung der Greifhilfe mit Wasser und/oder Zahnpasta, wodurch die Gefahr eines Abrutschens besteht. Zudem ist die Handhabung des mit der Greifhilfe gehaltenen Gegenstandes unkomfortabel.

Die AU 2004202347 A1 offenbart eine Zahnbürste, die an ihrem Ende mit einem Ring zum Durchstecken des kleinen Fingers versehen ist. Der Ring ist dabei derart mit dem Ende der Zahnbürste verbunden, dass ein Verschwenken und Drehen der Zahnbürste gegenüber dem Ring ermöglicht werden soll. Die schwenkfähige und drehbare Befestigung des Ringes macht die Herstellung der bekannten Zahnbürste insbesondere deshalb aufwendig, weil die Zahnbürste einen speziellen Befestigungspunkt für den Ring aufweisen muss. Zudem ist die Handhabung der Zahnbürste beim Zähneputzen unkomfortabel, wenn der kleine Finger des Benutzers in den Ring eingesteckt ist.

Weitere Greifhilfen für Zahnbürsten sind aus der US 4 165 896 A, der US 6 237 194 B1 und der US 4 606 484 A bekannt. Alle diese Greifhilfen weisen einen komplizierten Aufbau auf, der die Herstellung und Handhabung der Greifhilfen erschwert.

Hiervon ausgehend liegt der vorliegenden Erfindung die Aufgabe zugrunde, eine universell einsetzbare Greifhilfe für eine Handzahnbürste, eine elektrische Zahnbürste oder einen Aufsatz einer Zahnbürste vorzuschlagen, die sich einfach und kostengünstig herstellen lässt und bei der die Handhabung der Zahnbürste beim Halten mit der Greifhilfe sehr komfortabel ist, wobei die Zahnbürste stets sicher an der Hand oder dem Fuß eines Benutzers gehalten sein soll. Zudem soll sich die Greifhilfe leicht an der Zahnbürste oder dem Zahnbürstenaufsatz befestigen lassen.

Die vorgenannte Aufgabe wird durch den Gegenstand von Anspruch 1 und durch den Gegenstand von Anspruch 12 gelöst. Vorteilhafte Ausgestaltungen und Weiterbildungen der Erfindung sind in den weiteren Ansprüchen angeführt.

Zur Lösung der vorgenannten Aufgabe wird erfindungsgemäß eine Greifhilfe für eine Handzahnbürste, eine elektrische Zahnbürste oder einen Aufsatz für eine Zahnbürste vorgeschlagen, die wenigstens einen Halteabschnitt und wenigstens einen Befestigungsabschnitt aufweist. Der Halteabschnitt weist wenigstens eine Halteöffnung für wenigstens einen Finger oder Zeh eines Benutzers der Greifhilfe auf und der Befestigungsabschnitt wenigstens eine von der Halteöffnung getrennte Befestigungsöffnung für die Zahnbürste, wobei der Befestigungsabschnitt zur Befestigung der Greifhilfe mantel- und/oder längsseitig an der Zahnbürste oder dem Zahnbürstenaufsatz ausgebildet ist. Erfindungsgemäß ist keine Befestigung der Greifinilfe an der (unteren) Stirnseite der Zahnbürste vorgesehen, so wie dies in der AU 2004202347 A1 offenbart ist, sondern eine Befestigung an einer Mantelfläche oder Längsseitenfläche des zu haltenden Gegenstandes. Durch die Befestigung der Greifhilfe mantel- und/oder längsseitig wird die Handhabung der Zahnbürste bei der Benutzung deutlich gegenüber dem Stand der Technik vereinfacht und es wird ein hoher Benutzerkomfort erreicht. Zudem ist eine sehr stabile Befestigung der Zahnbürste über die Mantelfläche und/oder Längsseitenfläche möglich. Dabei wird durch den Halteabschnitt der Greifhilfe gewährleistet, dass sich die Greifhilfe und damit auch die Zahnbürste sicher über vorzugsweise lediglich einen Finger oder Zeh an der Hand oder dem Fuß eines Benutzers halten lässt, selbst wenn dieser die Greifhilfe nicht mehr willentlich, d. h. mit Muskelkraft, festhalten sollte. Ein unbeabsichtigtes Fallenlassen der Zahnbürste, beispielsweise bei einem ungewollten oder unkontrollierten Öffnen der Hand, ist bei der erfindungsgemäßen Greifhilfe nicht zu befürchten.

Bei der Erfindung ist vorgesehen, dass der Befestigungsabschnitt zum selbsthemmenden bzw. reibschlüssigen bzw. haftschlüssigen Ein- und/oder Durchstecken des Handgriffs der Zahnbürste oder eines Aufsatzes der Zahnbürste ausgebildet ist und sich selbsthemmend bzw. reibschlüssig bzw. haftschlüssig mit der Zahnbürste bzw. dem Aufsatz verbinden lässt. Vorzugsweise ist auch der Halteabschnitt zum selbsthemmenden bzw. reibschlüssigen bzw. haftschlüssigen Ein- und/oder Durchstecken des Fingers oder Zehs ausgebildet. Bei der zuvor beschriebenen Ausführungsform ist es so, dass der Handgriff der Zahnbürste oder der Zahnbürstenaufsatz mit seiner Stirnseite in die Befestigungsöffnung des Befestigungsabschnitts eingeführt wird, bis er, vorzugsweise, den Befestigungsabschnitt durchgreift. Der Finger oder Zeh wird in die Halteöffnung des Halteabschnitts eingeschoben oder eingesteckt, wobei auch hier vorzugsweise vorgesehen ist, dass der Finger oder Zeh bei der Verwendung der Greifhilfe den Halteabschnitt durchgreift. Dadurch sind eine sichere und stabile Befestigung der Zahnbürste an der Greifhilfe einerseits und ein stabiles und sicheres Halten der Greifhilfe mit dem Finger oder Zeh andererseits in gleicher Weise möglich. Beim Ein- und vorzugsweise Durchstecken bzw. -schieben des Handgriffs der Zahnbürste oder des Aufsatzes in den Befestigungsabschnitt bzw. des Fingers oder Zehs in den Halteabschnitt kann es aufgrund einer elastischen Ausbildung der Abschnitte zu einer Dehnung der Abschnitte verbunden mit einer Weitung bzw. Vergrößerung des Durchmessers und/oder einer Formänderung der Befestigungsöffnung und/oder der Halteöffnung kommen, so dass der Handgriff und/oder der Aufsatz reibschlüssig an dem Befestigungsabschnitt und der Finger oder Zeh reibschlüssig an dem Halteabschnitt gehalten wird. Entsprechendes kann dann gelten, wenn sich der Befestigungsabschnitt in der Art einer Klemme seitlich an den Handgriff oder den Zahnbürstenaufsatz anklemmen lässt. Ebenso kann sich der Halteabschnitt in entsprechender Weise an den Finger oder Zeh anklemmen lassen. So ist es möglich, die erfindungsgemäße Greifhilfe in einfacher Weise an einer Zahnbürste zu befestigen und diese mit unterschiedlich dicken Fingern oder Zehen sicher zu halten.

Der Befestigungsabschnitt und/oder der Halteabschnitt sind vorzugsweise als geschlossene Ringabschnitte ausgebildet, wobei der Befestigungsabschnitt den Handgriff oder den Aufsatz und der Halteabschnitt den Finger oder Zeh im Benutzungszustand der Greifhilfe vollumfänglich umgibt. Die Form des Ringabschnitts ist jedoch nicht auf die Kreisform beschränkt. Der Ringabschnitt kann auch eine andere Querschnittsform aufweisen, beispielsweise oval ausgebildet sein. Um eine sichere Befestigung der Zahnbürste an der Greifhilfe einerseits und/oder das sichere Halten der Greifhilfe mit einem Finger oder Zeh andererseits sicherzustellen, ist es zweckmäßig, wenn der Befestigungsabschnitt und/oder der Halteabschnitt jeweils ringförmig bzw. als Ringteil mit kreisförmiger Querschnittsfläche der Befestigungsöffnung bzw. der Halteöffnung ausgebildet sind. Bei Benutzung der Greifhilfe kann das Gehäuse bzw. der Handgriff der Zahnbürste oder der Aufsatz dann gegen eine vorzugsweise zylinderförmige oder zumindest bereichsweise konusförmige Innenfläche des Befestigungsabschnitts anliegen, wobei der Handgriff oder der Aufsatz reibschlüssig bzw. selbsthemmend in den Befestigungsabschnitt eingesteckt bzw. durch den Befestigungsabschnitt hindurchgesteckt sind. Das Gleiche gilt im Zusammenhang mit dem Ein- oder Durchstecken des Fingers oder Zehs in einen als Ringteil ausgebildeten Halteabschnitt.

Um die Handhabung der Zahnbürste beim Halten mit der Greifhilfe zu verbessern, können der Befestigungsabschnitt und der Halteabschnitt in einer Ebene nebeneinanderliegend angeordnet sein. Vorzugsweise sind der Befestigungsabschnitt und der Halteabschnitt als nebeneinanderliegend angeordnete Ringteile ausgebildet, die auf zueinander parallelen Mittelpunktsachsen liegen. Bei dieser Ausführungsform ist es möglich, beispielsweise den Daumen in den Halteabschnitt einzustecken und mit den verbleibenden Fingern der Hand die an der Greifhilfe über den Befestigungsabschnitt befestigte Zahnbürste zu (um-)greifen. Bei Benutzung der Zahnbürste unter Verwendung der erfindungsgemäßen Greifhilfe ist es dann so, dass die Daumenachse und die Mittellängsachse der Zahnbürste im Wesentlichen parallel zueinander verlaufen und der Daumen in Richtung zum bürstenseitigen Ende der Zahnbürste bzw. des Zahnbürstenaufsatzes zeigt. Damit lässt sich die Zahnbürste optimal und unbehindert von der Greifhilfe halten.

Vorzugsweise wird der Aufsatz der Zahnbürste mit seinem von den Reinigungsborsten abgewandten Ende in den Befestigungsabschnitt eingesteckt, weiter vorzugsweise, durch den Befestigungsabschnitt hindurchgesteckt. Hierbei kann es zu einer Weitung bzw. Durchmesservergrößerung der Befestigungsöffnung kommen, wenn der Aufsatz in die Befestigungsöffnung eingeführt wird. Dies setzt eine entsprechende reversible Dehnbarkeit des Befestigungsabschnitts voraus. Das Halten der Zahnbürste über den Zahnbürstenaufsatz vereinfacht die Handhabung der Zahnbürste und insbesondere das korrekte Führen der Zahnbürste beim Reinigungsvorgang der Zähne. Gleichzeitig lässt sich die Zahnbürste über die an dem Aufsatz befestigte Greifhilfe sicher halten.

Die Geometrie, das heißt die Form und Größe, der Befestigungsöffnung kann an die Geometrie des Handgriffs und/oder des Aufsatzes angepasst sein. Vorzugsweise weist die Befestigungsöffnung eine kreisförmige Querschnittsfläche auf. Je nach Querschnittsgeometrie des Handgriffs und/oder des Aufsatzes kann die Befestigungsöffnung aber auch eine nicht-kreisförmige Querschnittsfläche aufweisen. Das Gleiche gilt für die Halteöffnung, die ebenfalls vorzugsweise eine kreisförmige Querschnittsfläche aufweist. Der Begriff "Querschnittsfläche" im Sinne der Erfindung bezieht sich auf eine Schnittfläche quer zur Längsachse der Zahnbürste. Die Form und/oder die Größe der Querschnittsfläche kann sich über die Höhe des Befestigungsabschnitts und/oder des Halteabschnitts ändern, um eine optimale Anpassung an die Geometrie des Handgriffs und/oder des Aufsatzes oder des Fingers bzw. Zehs zu erreichen.

Vorzugsweise kann vorgesehen sein, dass der Befestigungsabschnitt und der Halteabschnitt eine unterschiedliche Höhe aufweisen, wobei die Höhe auf die Erstreckung in Längsrichtung des Handgriffs und/oder des Aufsatzes und den Gebrauchszustand der Greifhilfe bezogen ist. Insbesondere kann der Befestigungsabschnitt eine geringere Höhe aufweisen als der Halteabschnitt, so dass eine größere Haltefläche für den Finger oder Zeh bereitgestellt wird, was das vorzugsweise selbsthemmende Halten der Greifhilfe mit einem Finger oder Zeh erleichtert.

Der Befestigungsabschnitt und der Halteabschnitt können in einem Verbindungsbereich der Greifhilfe miteinander verbunden sein. Die Materialdicke in dem Verbindungsbereich kann größer sein als die Materialdicke des Befestigungsabschnitts und/oder des Halteabschnitts außerhalb von dem Verbindungsbereich. Damit ist eine ausreichend stabile Verbindung von Befestigungsabschnitt und Halteabschnitt gewährleistet.

Die Greifhilfe weist erfindungsgemäß einen einstückigen bzw. einteiligen, den Befestigungsabschnitt und den Halteabschnitt bildenden Grundkörper auf, was die Herstellung der erfindungsgemäßen Greifhilfe vereinfacht. Der Grundkörper besteht aus einem elastischen Material derart, dass sich der Befestigungsabschnitt reibschlüssig durch Ein- und/oder Durchstecken eines Handgriffs der Zahnbürste oder eines Zahnbürstenaufsatzes oder durch seitliches reibschlüssiges Anklemmen an den Handgriff oder den Aufsatz mit der Zahnbürste oder dem Aufsatz verbinden lässt.

Vorzugsweise besteht der Grundkörper lediglich aus einem Material. Der Grundkörper kann aus Gummi oder Silikon bestehen. Besonders bevorzugt besteht der Grundkörper aus einem Silikonkautschuk, wie Silopren®. Auch ein anderer gummiartiger Werkstoff ist möglich. Durch die hohe Elastizität des Grundkörpers wird sichergestellt, dass der Befestigungsabschnitt und, vorzugsweise, auch der Halteabschnitt ausreichend dehnbar sind, um eine reibschlüssige Verbindung mit der Zahnbürste oder dem Aufsatz bzw. dem Finger oder Zeh auszubilden. Durch die hohe Elastizität des Grundkörpers wird auch sichergestellt, dass sich der Befestigungsabschnitt relativ zum Halteabschnitt verformen lässt, wobei auch im Verbindungsbereich von Befestigungsabschnitt und Halteabschnitt eine hohe Elastizität der Greifhilfe gefordert ist. Dadurch wird eine ergonomische Handhabung der Zahnbürste bei Verwendung der erfindungsgemäßen Greifhilfe in sehr komfortabler Weise möglich. Das Verhältnis von maximaler Materialdicke in einem Verbindungsbereich von Befestigungsabschnitt und Halteabschnitt zu einer minimalen Materialdicke des Befestigungsabschnitts und/oder des Halteabschnitts sollte dabei vorzugsweise in einem Bereich zwischen 1,0 bis 2,0, vorzugsweise zwischen 1,6 bis 1,8, liegen, um eine relative Bewegbarkeit von Befestigungsabschnitt und Halteabschnitt zu erreichen.

Der Grundkörper kann vorzugsweise eine Shorehärte nach DIN EN ISO 868 von weniger als 40 Shore-A, insbesondere von weniger als 20 bis 30 Shore-A, aufweisen. Dies trägt zu einer außerordentlich guten Haftwirkung des Befestigungsabschnitts und/oder des Halteabschnitts im Benutzungszustand der Greifhilfe bei.

Die Greifhilfe lässt sich vorzugsweise lösbar mit der Zahnbürste verbinden, was dadurch erfolgen kann, dass die Greifhilfe mit dem Zahnbürstenaufsatz verbunden wird. Zusammen mit dem Zahnbürstenaufsatz wird dann die Greifhilfe von einem Handgriff (Gehäuse) der Zahnbürste abgenommen. Dies lässt es in einfacher Weise zu, die Greifhilfe nach einem Auswechseln des Aufsatzes erneut zu verwenden. Beispielsweise kann die Greifhilfe am Borstenaufsatz einer (elektrischen) Zahnbürste befestigt sein, wobei die Greifhilfe nach einer Abnutzung des Aufsatzes von diesem getrennt und anschließend bei einem neuen Aufsatz wiederverwendet werden kann.

Die vorgenannten Aspekte und Merkmale der vorliegenden Erfindung sowie die nachfolgend anhand der Zeichnung beschriebenen Aspekte und Merkmale der vorliegenden Erfindung können unabhängig voneinander, in einer beliebigen Kombination, aber auch jeweils im Zusammenhang mit den Oberbegriffsmerkmalen von Anspruch 1 der vorliegenden Erfindung realisiert werden, auch wenn dies nicht im Einzelnen beschrieben ist. Hier kann jedem beschriebenen Merkmal oder Aspekt eigenerfinderische Bedeutung zukommen. Eine beliebige Kombination der Merkmale der Unteransprüche mit den Oberbegriffsmerkmalen von Anspruch 1 ist ebenfalls möglich, auch wenn dies nicht ausdrücklich erwähnt ist.

Weitere Vorteile, Merkmale, Eigenschaften und Aspekte der vorliegenden Erfindung ergeben sich aus der nachfolgenden Beschreibung einer bevorzugten Ausführungsform anhand der Zeichnung. Es zeigen:
- Fig. 1: eine perspektivische Ansicht einer erfindungsgemäßen Greifhilfe schräg von oben,
- Fig. 2: die in Fig. 1 gezeigte Greifhilfe in einer Draufsicht,
- Fig. 3: die in Fig. 1 gezeigte Greifhilfe in einer Schnittansicht quer zur Längsrichtung einer mit der Greifhilfe zu befestigenden Zahnbürste oder eines Zahnbürstenaufsatzes und
- Fig. 4: eine erfindungsgemäße Greifhilfe in einem Verwendungszustand nach Befestigung der Greifhilfe an einem Aufsatz einer elektrischen Zahnbürste in einer perspektivischen Ansicht von der Seite.

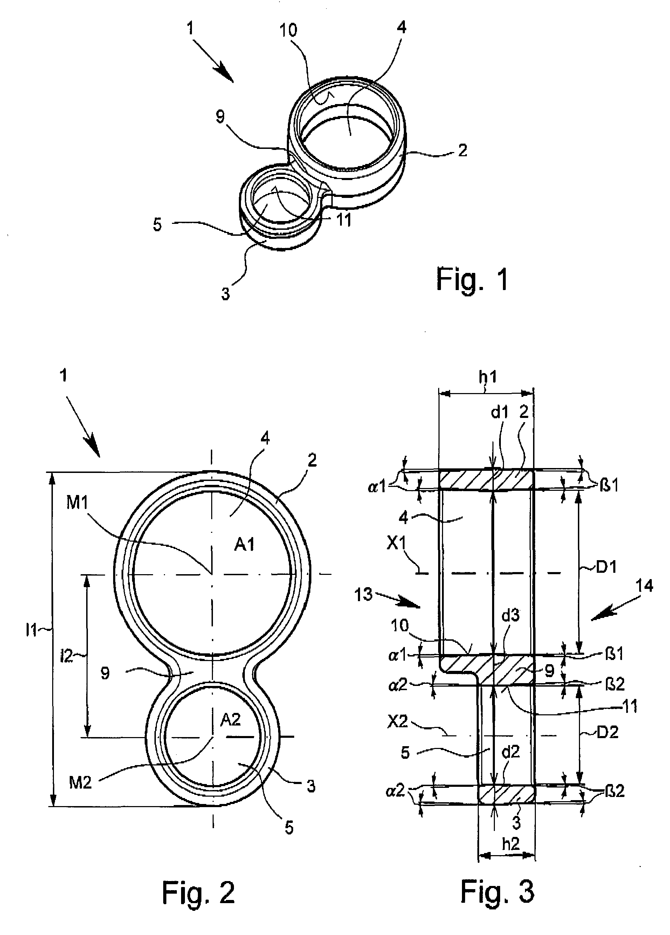

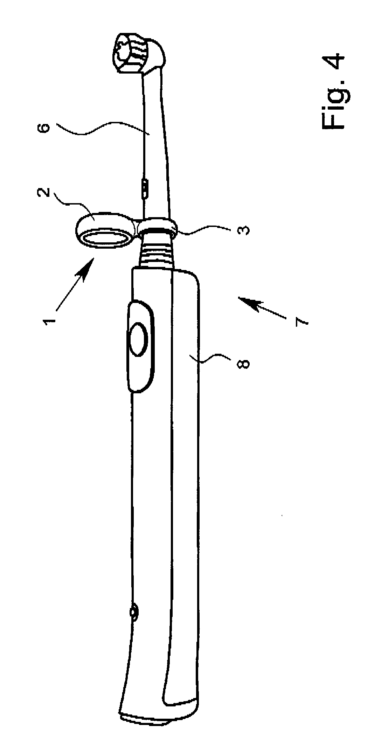

In Fig. 1 ist eine Greifhilfe 1 für den Aufsatz 6 einer elektrischen Zahnbürste 7 gezeigt. Die Greifhilfe 1 weist einen Halteabschnitt 2 und einen Befestigungsabschnitt 3 auf, wobei der Halteabschnitt 2 eine Halteöffnung 4 für einen Finger eines Benutzers der Greifhilfe 1 und der Befestigungsabschnitt 3 wenigstens eine von der Halteöffnung 4 getrennte Befestigungsöffnung 5 für den Aufsatz 6 aufweist. Der Befestigungsabschnitt 3 ist zur Befestigung der Greifhilfe 1 mantel- oder längsseitig an dem Aufsatz 6 ausgebildet. Dies ist beispielsweise in Fig. 4 gezeigt, wobei die Greifhilfe 1 an einem Zahnbürstenaufsatz 6 einer elektrischen Zahnbürste 7 befestigt und im Befestigungszustand seitlich neben dem Zahnbürstenaufsatz 6 angeordnet ist. Der Zahnbürstenaufsatz 6 ist in üblicher Weise stirnseitig an einem Griffteil 8 der Zahnbürste 7 lösbar befestigt. Das Griffteil 8 weist zur Befestigung mit dem Zahnbürstenaufsatz 6 an seiner vorderen Stirnseite einen Befestigungszapfen auf, auf den der Zahnbürstenaufsatz 6 aufgesteckt wird. Die Befestigung des Zahnbürstenaufsatzes 6 an der Greifhilfe 1 erfolgt vor dem Verbinden des Zahnbürstenaufsatzes 6 mit dem Handgriff 8 durch stirnseitiges Ein- und Durchstecken des Zahnbürstenaufsatzes 6 mit seinem von Zahnreinigungsborsten abgewandten Ende in bzw. durch die Befestigungsöffnung 5. Nach dem Aufstecken des Zahnbürstenaufsatzes 6 auf den Befestigungszapfen des Handgriffs 8 kann die elektrische Zahnbürste 7 sicher über die Greifhilfe 1 gehalten werden.

Das Halten der Greifhilfe 1 erfolgt mit dem Daumen durch Einstecken bzw. Einschieben des Daumens in die Halteöffnung 4 des Halteabschnitts 2. Bei der Benutzung der Zahnbürste 7 ist es dann so, dass die Greifhilfe 1 über den in die Halteöffnung 4 eingesteckten Daumen unverlierbar an der Hand gehalten bzw. befestigt ist. Bei der Benutzung der Zahnbürste 7 wird diese über die Greifhilfe 1 am Daumen des Benutzers gehalten und kann mit den übrigen Fingern des Benutzers zusätzlich umgriffen werden. Durch die Greifhilfe 1 ist eine sehr komfortable Handhabung der Zahnbürste 7 ohne Beeinträchtigung der Handhabungsfreiheit möglich.

Die Verbindung zwischen einem Finger und dem Halteabschnitt 2 einerseits und/oder die Verbindung zwischen dem Aufsatz 6 und dem Befestigungsabschnitt 3 andererseits ist vorzugsweise selbsthemmend bzw. reibschlüssig. Dadurch kann ein Verlust der Greifhilfe 1 beim nichtgewollten Loslassen des stabförmigen Gegenstandes ausgeschlossen werden.

Der Halteabschnitt 2 und der Befestigungsabschnitt 3 sind vorzugsweise ringförmig und geschlossen ausgebildet sowie durch einen Verbindungsabschnitt 9 voneinander getrennt. Die Halteöffnung 4 weist eine vorzugsweise kreisförmige Querschnittsfläche A1 auf, die an die Form und Größe des Fingers (Daumens) des Benutzers angepasst ist. Hierdurch wird sichergestellt, dass die Greifhilfe 1 mit einem Finger (Daumen) des Benutzers sehr komfortabel gehalten werden kann.

Auch die Querschnittsfläche A2 der Befestigungsöffnung 5 ist kreisförmig konturiert und an die Form und Größe der Querschnittsfläche des Zahnbürstenaufsatzes 6 angepasst. Im Übrigen ist die Querschnittsfläche A1 der Halteöffnung 4 größer als die Querschnittsfläche A2 der Befestigungsöffnung 3, was darauf zurückzuführen ist, dass bei der beschriebenen Ausführungsform die Zahnbürste 7 über den Zahnbürstenaufsatz 6 an dem Befestigungsabschnitt 3 der Greifhilfe 1 befestigt werden soll. Grundsätzlich ist jedoch eine Ausführungsform möglich, bei der die Greifhilfe 1 an dem Handgriff 8 der Zahnbürste 7 befestigt werden kann, wobei dann der Befestigungsabschnitt 3 und damit die Befestigungsöffnung 5 entsprechend größer ausgebildet sein müssen.

Die Gesamtlänge 11 der Greifhilfe 1 in einer Aufsichtebene quer zu der Längsachse X1 des Halteabschnitts 2 und quer zur Längsachse X2 des Befestigungsabschnitts 3 liegt gemäß Fig. 2 vorzugsweise in einem Bereich von 35 bis 50 mm, weiter vorzugsweise in einem Bereich von 40 bis 45 mm. Bei der dargestellten Ausführungsform beträgt die Länge l1 ca. 41 mm, Die Länge l2 bzw. der Abstand zwischen dem Mittelpunkt M1 der Halteöffnung 4 und dem Mittelpunkt M2 der Befestigungsöffnung 5 liegt vorzugsweise in einem Bereich von 15 bis 25 mm, insbesondere beträgt die Länge l2 ca. 20 mm. Der Halteabschnitt 2 und der Befestigungsabschnitt 3 liegen somit sehr nah nebeneinander, so dass die Greifhilfe 1 in einem Verwendungszustand, bei dem die Zahnbürste 7 über den Zahnbürstenaufsatz 6 an dem Befestigungsabschnitt 3 der Greifhilfe 1 befestigt ist, über den Halteabschnitt 2 mit dem Daumen gehalten werden kann, während die übrigen Finger der Hand die Zahnbürste 7 umgreifen. Der Zeigefinger kann hierbei zur Führung der Zahnbürste 7 dienen und bei Benutzung der Zahnbürste 7 auf dem Zahnbürstenaufsatz 6 aufliegen, während der kleine Finger, der Ringfinger und der mittlere Finger der Hand den Handgriff 8 umfassen können, Damit ist eine sehr komfortable Handhabung der Zahnbürste 7 beim Zähneputzen sichergestellt, wobei die Gefahr eines ungewollten Verlierens oder Fallenlassens der Zahnbürste 7 äußerst gering ist.

In Fig. 3 ist eine Schnittansicht der Greifhilfe 1 gezeigt, wobei der Halteabschnitt 2 und der Befestigungsabschnitt 3 in einer gemeinsamen Ebene quer zu den Längsachsen X1, X2 nebeneinanderliegend angeordnet sind. Wie sich weiter aus Fig. 3 ergibt, entspricht die Dicke d1 des Halteabschnitts 2 im Wesentlichen der Dicke d2 des Befestigungsabschnitts 3. Im Verbindungsbereich 9 weist die Greifhilfe 1 dagegen eine größere Dicke d3 auf, wobei das Verhältnis von maximaler Materialdicke d3 im Verbindungsbereich 9 zu einer minimalen Materialdicke d1, d2 des Halteabschnitts 2 bzw. des Befestigungsabschnitts 3 vorzugsweise in einem Bereich zwischen 1,6 bis 1,8 liegen kann.

Im übrigen ergibt sich aus Fig. 3, dass der Innendurchmesser des ringförmigen Halteabschnitts 2 über die Höhe h1 des Halteabschnitts 2 nicht konstant ist, sondem von einem minimalen Innendurchmesser D1 auf mittlerer Höhe des Halteabschnitts 2 in Richtung auf die Außenseiten 13, 14 der Greifhilfe 1 geringfügig zunimmt. Hierbei kann ein maximaler Innendurchmesser am distalen Außenrand auf der distalen Außenseite 13 des Halteabschnitts 2 erreicht werden, der geringfügig größer ist als ein maximaler Innendurchmesser am proximalen Außenrand des Halteabschnitts 2 auf der gegenüberliegenden proximalen Außenseite 14. Die Halteöffnung 4 kann sich ausgehend von einem mittleren Bereich des Halteabschnitts 2 konus- bzw. kegelstumpfförmig in Richtung auf beide Außenseiten 13, 14 der Greifhilfe 1 erweitern. Zwischen dem mittleren Bereich des Halteabschnitts 2 und dem distalen Außenrand weist der Halteabschnitt 2 auf seiner Innenseite eine Schräge auf, die um einen Winkel α1 von 1° bis 5°, vorzugsweise von 2°, zur Längsachse X1 des Halteabschnitts 2 geneigt ist. Zwischen dem mittleren Bereich des Halteabschnitts 2 und dem proximalen Außenrand weist der Halteabschnitt 2 auf seiner Innenseite eine Schräge auf, die um einen Winkel β1 von 0,5° bis 5°, vorzugsweise von weniger als 2°, insbesondere von weniger als 1°, zur Längsachse X1 des Halteabschnitts 2 geneigt ist. Ähnliche oder identische Abschrägungen finden sich auf der Außenseite des Halteabschnitts 2. Im Ergebnis nimmt die Dicke des Halteabschnitts 2 von einer maximalen Dicke d1 im mittleren Bereich des Halteabschnitts 2 in Richtung auf beide Außenseiten 13, 14 ab.

Der zuvor beschriebene Querschnittsverlauf der Halteöffnung 4 über die Höhe h1 des Halteabschnitts 2 lässt es in einfacher Weise zu, den Finger (Daumen) des Benutzers selbsthemmend, d. h. reibschlüssig mit einer Innenfläche 10 des Halteabschnitts 2 zu verbinden. Durch die Einschnürung des Halteabschnitts 2 im mittleren Bereich wird eine an die Anatomie des Fingers (Daumens) des Benutzers angepasste Geometrie der Halteöffnung 4 geschaffen, die das Einstecken des Fingers über die proximale Außenseite 14 in den Halteabschnitt 2 vereinfacht und darüber hinaus eine geringfügige Bewegbarkeit der Fingerspitze auf der distalen Außenseite 13 des Halteabschnitts 2 ermöglicht, was den Benutzerkomfort beim Halten der Greifhilfe 1 mit dem Finger sehr erhöht.

Grundsätzlich ist es aber auch möglich, dass die Halteöffnung 4 über die gesamte Höhe h1 zylinderförmig ausgebildet ist oder lediglich ausgehend von dem mittleren Bereich zur distalen Außenseite 13 konusartig erweitert ist.

Die Befestigungsöffnung 5 erweitert sich sowohl in Richtung auf die proximale Außenseite 14 der Greifhilfe 1 als auch in Richtung auf die distale Außenseite 13 konusförmig und erreicht einen minimalen Innendurchmesser D2 auf gleicher Höhe wie der Halteabschnitt 2. Zwischen dem Bereich des Befestigungsabschnitts 3, in dem der minimale Innendurchmesser D2 erreicht wird, und dem distalen Außenrand weist der Befestigungsabschnitt 3 auf seiner Innenseite dementsprechend eine Schräge auf, die um einen Winkel α2 von 0,5° bis 5°, vorzugsweise von weniger als 2°, insbesondere von weniger als 1°, zur Längsachse X2 des Befestigungsabschnitts 3 geneigt ist. Auf der proximalen Seite kann der Befestigungsabschnitt 3 ebenfalls innenliegend abgeschrägt sein, wobei die Schräge um einen Winkel β2 von 0,5° bis 5°, vorzugsweise von weniger als 2°, insbesondere von weniger als 1°, zur Längsachse X2 des Befestigungsabschnitts 3 geneigt ist. Ähnliche oder identische Schrägen sind auf der Außenseite des Befestigungsabschnitts 3 vorgesehen. Das Einstecken des Zahnbürstenaufsatzes 6 in die Befestigungsöffnung 5 erfolgt über die distale Außenseite 13. Im Ergebnis ist die Geometrie der Befestigungsöffnung 5 an die Geometrie der Mantelfläche des Zahnbürstenaufsatzes 6 angepasst, so dass auch hier eine selbsthemmende bzw. reibschlüssige Verbindung des Zahnbürstenaufsatzes 6 mit einer Innenfläche 11 des Befestigungsabschnitts 3 der Greifhilfe 1 möglich ist.

Der Durchmesser D2 des Befestigungsabschnitts 3 kann jedoch auch über die gesamte Höhe h2 des Befestigungsabschnitts 3 konstant sein. Bei einer anderen bevorzugten Ausführungsform kann sich die Befestigungsöffnung 5 ausgehend von der distalen Außenseite 13 in Richtung zur proximalen Außenseite 14 hin kontinuierlich konusförmig erweitern.

Die Höhe h1 des Halteabschnitts 2 ist größer als die Höhe h2 des Befestigungsabschnitts 3, so dass eine ausreichend große Haltefläche für den Finger im Bereich der Halteöffnung 4 geschaffen wird. Die Höhe h1 des Halteabschnitts kann zwischen 10 mm und 15 mm, insbesondere ca. 12 mm, betragen. Die Höhe h2 des Befestigungsabschnitts liegt dagegen vorzugsweise in einem Bereich zwischen 5 und 10 mm, insbesondere bei ca. 7 mm. Damit wird dem Umstand Rechnung getragen, dass die Form und Größe des Fingers individuell sehr unterschiedlich sein kann. Durch eine ausreichend große Haltefläche 10 wird erreicht, dass sich die Greifhilfe 1 an Fingern unterschiedlicher Dicke und/oder Länge gleichermaßen gut halten lässt.

Die Dicken d1, d2 des Halteabschnitts 2 und des Befestigungsabschnitts 3 können in einem Bereich zwischen 1 mm und 5 mm, vorzugsweise in einem Bereich zwischen 2 mm und 3 mm, liegen. Die größere Dicke d3 der Greifhilfe 1 im Verbindungsbereich 9 ermöglicht eine stabile Verbindung des Halteabschnitts 2 mit dem Befestigungsabschnitt 3. Dies ist von Vorteil, da im Verwendungszustand der Zahnbürste 7 beim Halten mit der Greifhilfe 1 gerade im Verbindungsbereich 9 höhere mechanische Belastungen auftreten können. Das Dickenverhältnis ist allerdings so gewählt, dass bei Ausbildung der Greifhilfe 1 aus einem elastischen Material eine relative Bewegbarkeit zwischen dem Befestigungsabschnitt 3 und dem Halteabschnitt 2 in ausreichendem Maße gewährleistet ist, was die Handhabung der Zahnbürste 7 beim Halten mit der Greifhilfe 1 und das Umfassen mit den weiteren Fingern der Hand vereinfacht.

Um Verletzungen zu vermeiden und das Einschieben bzw. Einstecken des Fingers und des Zahnbürstenaufsatzes 6 zu vereinfachen, weist die Greifhilfe 1 gerundete Kanten auf.

Der Befestigungsabschnitt 3 und der Halteabschnitt 2 werden durch einen einstückigen Grundkörper aus einem elastischen Material gebildet, vorzugsweise aus Silikon oder einem Material mit ähnlichen mechanischen Eigenschaften. Insbesondere kann die Greifhilfe 1 aus einem Silikon-Kautschuk, wie Silopren®, bestehen. Silikone gelten als physiologisch unbedenklich und zeichnen sich durch eine hohe Elastizität aus, was eine Relativbewegung zwischen dem Halteabschnitt 2 und dem Befestigungsabschnitt 3 und damit zwischen der Hand bzw. dem in den Halteabschnitt 2 eingeführten Finger und der über den Befestigungsabschnitt 3 gehaltenen Zahnbürste 7 zulässt, so dass die Handhabung der Zahnbürste 7 beim Putzen der Zähne sehr komfortabel ist. Die einstückige bzw. einteilige Herstellung der Greifhilfe 1 aus einem Silikonmaterial oder aus Gummi lässt eine einfache und kostengünstige Fertigung zu. Durch die Elastizität des Werkstoffs ist es zudem möglich, einen stabförmigen Gegenstand in die Befestigungsöffnung 5 einzuführen, der einen größeren Querschnitt als die Befestigungsöffnung 5 aufweist. Beim Einstecken bzw. Durchstecken des Gegenstands in die Befestigungsöffnung 5 wird der Befestigungsabschnitt 3 dann elastisch geweitet, so dass sich eine selbsthemmende bzw. reibschlüssige Verbindung zwischen dem stabförmigen Gegenstand und dem Befestigungsabschnitt 3 ausbildet. Das gleiche gilt im Zusammenhang mit dem Halteabschnitt 2 beim Einstecken eines Fingers, wobei der Fingerquerschnitt stets von dem idealen Kreisquerschnitt abweicht.

## Patentansprüche

1. Greifhilfe (1) für eine Handzahnbürste oder eine elektrische Zahnbürste (7) oder einen Aufsatz (6) einer elektrischen Zahnbürste (7), mit wenigstens einem Halteabschnitt (2) und mit wenigstens einem Befestigungsabschnitt (3), wobei der Halteabschnitt (2) wenigstens eine Halteöffnung (4) für wenigstens einen Finger oder Zeh eines Benutzers der Greifhilfe aufweist und wobei der Befestigungsabschnitt (3) wenigstens eine von der Halteöffnung (4) getrennte Befestigungsöffnung (5) für die Zahnbürste (7) oder den Aufsatz (6) aufweist, wobei der Befestigungsabschnitt (3) zur Befestigung der Greifhilfe (1) mantel- und/oder längsseitig an der Zahnbürste (7) oder dem Aufsatz (6) ausgebildet ist, wobei ein einstückiger den Befestigungsabschnitt (3) und den Halteabschnitt (2) bildender Grundkörper aus einem elastischen Material derart vorgesehen ist, dass der Befestigungsabschnitt (3) durch Einund/oder Durchstecken eines Handgriffs (8) der Zahnbürste (7) oder eines Aufsatzes (6) oder durch seitliches Anklemmen an den Handgriff (8) oder den Aufsatz (6) mit der Zahnbürste (7) oder dem Aufsatz (6) reibschlüssig verbindbar ist.

2. Greifhilfe (1) nach Anspruch 1, **dadurch gekennzeichnet, dass** der Halteabschnitt (2) zum reibschlüssigen Ein- und/oder Durchstecken eines Fingers oder Zehs oder zum reibschlüssigen seitlichen Anklemmen an den Finger oder Zeh ausgebildet ist.

3. Greifhilfe (1) nach einem der vorhergehenden Ansprüche, **dadurch gekennzeichnet, dass** der Grundkörper aus Gummi oder Silikon besteht.

4. Greifhilfe (1) nach einem der vorhergehenden Ansprüche, **dadurch gekennzeichnet, dass** der Grundkörper eine Shore-Härte von weniger als 40 Shore-A, insbesondere von weniger als 20 bis 30 Shore-A, aufweist.

5. Greifhilfe (1) nach einem der vorhergehenden Ansprüche, **dadurch gekennzeichnet, dass** der Befestigungsabschnitt (3) und/oder der Halteabschnitt (2) als umlaufend geschlossene Ringabschnitte ausgebildet sind.

6. Greifhilfe (1) nach einem der vorhergehenden Ansprüche, **dadurch gekennzeichnet, dass** der Befestigungsabschnitt (3) und/oder der Halteabschnitt (2) ringförmig mit kreisförmiger Querschnittsfläche der Befestigungsöffnung (5) und/oder der Halteöffnung (4) ausgebildet ist.

7. Greifhilfe (1) nach einem der vorhergehenden Ansprüche, **dadurch gekennzeichnet, dass** der Befestigungsabschnitt (3) und der Halteabschnitt (2) in Längsrichtung des stabförmigen Gegenstands nebeneinanderliegend angeordnet sind.

8. Greifhilfe (1) nach einem der vorhergehenden Ansprüche, **dadurch gekennzeichnet, dass** die Geometrie der Befestigungsöffnung (5) an die Geometrie des stabförmigen Gegenstandes angepasst ist und/oder dass die Geometrie der Halteöffnung (4) an die anatomische Geometrie des Fingers oder Zehs angepasst ist.

9. Greifhilfe (1) nach einem der vorhergehenden Ansprüche, **dadurch gekennzeichnet, dass** der Befestigungsabschnitt (3) und der Halteabschnitt (2) in Längsrichtung der Zahnbürste (7) und/oder des Aufsatzes (6) eine unterschiedliche Höhe aufweisen.

10. Greifhilfe (1) nach einem der vorhergehenden Ansprüche, **dadurch gekennzeichnet, dass** der Befestigungsabschnitt (3) lösbar mit der Zahnbürste (7) oder dem Aufsatz (6) verbindbar ist.

11. Greifhilfe (1) nach einem der vorhergehenden Ansprüche, **dadurch gekennzeichnet, dass** eine selbsthemmende Verbindung zwischen dem Befestigungsabschnitt (3) und dem Handgriff (8) oder dem Aufsatz (6) und/oder eine selbsthemmende Verbindung zwischen dem Halteabschnitt (2) und einem Finger oder Zeh durch elastisches Weiten der Befestigungsöffnung (5) oder der Halteöffnung (4) beim Ein- und/oder Durchstecken des Handgriffs (8) oder des Aufsatzes (6) bzw. des Fingers oder Zehs ausbildet.

12. Set mit einer Greifhilfe (1) nach einem der vorhergehenden Ansprüche und mit einer Zahnbürste (7) und/oder mit wenigstens einem Zahnbürstenaufsatz (6).

13. Set mit einer Greifhilfe (1) nach Anspruch 12, **dadurch gekennzeichnet, dass** die Befestigungsöffnung (5) vor der Befestigung der Greifhilfe (1) an der Zahnbürste (7) oder dem Zahnbürstenaufsatz (6) einen kleineren Durchmesser und/oder eine kleinere Querschnittsfläche und/oder eine andere Querschnittsgeometrie aufweist als der Handgriff (8) oder der Aufsatz (6) in einem zur Befestigung mit der Greifhilfe (1) vorgesehenen Bereich des Handgriffs (8) oder des Aufsatzes (6).
